# EUROPEAN PATENT APPLICATION

(11) **EP 2 777 394 A1**
(43) Date of publication of application: **17.09.2014**
(21) Application number: 12464024.4
(22) Date of filing: 29.11.2012
(51) Int. Cl.: A01N 25/04, A01N 25/30, A01N 31/04, A01N 37/02, A01N 37/06, A01N 65/12, A01N 65/20, A01P 15/00

(54) **Agricultural adjuvant composition and process for its obtainment**

(30) Priority: 27.11.2012 RO 201200887
(71) Applicant: SC Teso Spec SRL, 915200 Fundulea, Jud. Calarasi (RO)
(72) Inventor: Vladulescu Constantin Marius, 031551 Bucharest (RO); Oancea Florin, 062082 Bucharest (RO); Velea Sanda, 023783 Bucharest (RO)

(57) **Abstract**

Invention refer to o composition of agricultural adjuvant, made from 42.1 ... 54.8 parts of ethyl esters of fatty acids from rapeseed or sunflower or 64.1 parts of methyl esters of fatty acids from soybean oil, 10,1..17.0 parts of ethyl alcohol, 3.9.. 6.4 parts of glycerol, 2.5...4.4 parts of triglycerides, 10.4...30 parts emulsifiers agent, represented by soybean liquid lecithin or soybean liquid lecithin and MOA-9, ether of fatty alcohol with polyoxy ethylene (9), or ammonium lauryl sulfate, 1.2 parts of potassium hydroxide or 0.95 parts of potassium acetate or 6.4 parts of potassium oleate, water 0.5... 1.7 parts, difference till 100 parts being unsaponifiable substances and salts of fatty acids or free fatty acids and salts. The process of obtainment involves the use of an excess of alcohol in the reaction of trans-esterification, maintaining than the products of trans-esterification reaction and of the in excess of the ethyl alcohol, or adding ethyl alcohol, and mixing with emulsifiers.

## Description

The present invention refer to a composition of agricultural adjuvant, intended to increase the performances of agrochemicals products applied by spraying, added as is in the mixtures done into the tanks of the spraying equipment, and to a process for its obtaining, using primarily raw materials from renewable resources.

There are known several compositions which, when are added to the mixtures done into the tanks of the spraying equipment, generically named "tank mix" in the state-of the art, increase the performances of agrochemicals products applied by spraying. Aliphatic esters of fatty acids, mainly methyl esters, under the name of methylated seed oil, are largely used as spray adjuvants, due to their activity of enhancement of the foliar penetration of aqueous suspension of agrochemicals through the highly hydrophobic plant cuticle. In the usual composition to the esters of the fatty acids are added surfactants / emulsifiers, for a supplementary reduction of the viscosity of aqueous suspensions and of superficial tension, between the sprayed drops and the surface of leaves, improving in this manner the wetting and coverage capacity on the leaves. The surfactants are commonly chosen from the category of nonionic ones, usually ethoxylated fatty alcohols or ethoxylated fatty acids. Also in the compositions of spray adjuvants are often added agents for the control of the drift, which are reducing the formation of the fine droplets with a high dispersion degree, and humectants, which are reducing the rate of evaporation of the water and of the active ingredients from the leaves.

Patent Application WO9831223 describe a composition of fatty acids esters, ethoxylated fatty acids and a terpenic compounds, which supplementary enhance the penetrability of the active substances from the agrochemical products, especially plant protection products, through the plant cuticle. Patent Application WO9929171 refers to an adjuvant composition which includes an ester of fatty acids with lower alcohols and a combination of ionic and non-ionic surfactants. Patent US 6,797,673 claim a composition of agricultural adjuvant on which the embodiment include methylated vegetable oil, ethoxylated fatty alcohol / polyoxy ethylene ether, with formula H₂₃C₁₁(CH₂CH₂O)₅, and an agent of droplets drift control based on lecithin. Patent Application WO2010049070 disclose a composition of agricultural adjuvant which contain aliphatic esters of fatty acids with 16...22 carbon atoms, exemplified by ethylated oil of sunflower with high-oleic acid, non-ionic surfactant derived from polyols, exemplified by sorbitan mono/trioleates and C8-C10 alkyl polyglucosides, and optionally, polyols, represented by glucose or sorbitol, and/or silicones.

A main disadvantage of these composition obtained mainly from natural material from renewable resources is determined by their increased biodegradability, which make necessary the addition of biocides / preservatives, to assure their stability on the storage according to the legal requirements and to maintain their useful characteristics, of agents for enhancement of cuticle penetration, surfactants, humectants. The synthetic biocides use as preserving agents have the following disadvantages: generate supplementary costs, raise additional concerns regarding environmental protection and prohibit the certification of the spray adjuvants resulted from renewable resources with a verified traceability for the systems of organic agriculture. It is a need to develop compositions with intrinsic resistance to biodegradation. It is also a need for composition which, beside their intrinsic resistance to biodegradation, improves supplementary penetration through cuticle in plant of a variety of agrochemical products, assure a better retention and distribution of the drops sprayed on the leaves, concomitantly reducing the drift and the evaporation of water and active ingredients. Are necessary also processes for the obtainment of such composition of spray adjuvants, which should not generated co-products or should generate a very low quantity of such co-products, and should have specific energy consumptions as low as possible.

Invention aim to solve the technical problems presented above, by disclosing a composition based on fatty acids esters, which present an intrinsic resistance to biodegradation, being efficient both for plant protection products and for those with activity of plant nutrition and plant stimulation. Another object of this invention is to describe a process for obtainment of such composition, which is take place at lower temperatures and which are not generating co-products from the process of obtainment of the fatty acids esters by trans-esterification of the vegetable oil with lower alcohols.

The composition of agricultural adjuvant according to invention is made from 42.1 ... 54.8 parts of ethyl esters of fatty acids from rapeseed or sunflower or 64.1 parts of methyl esters of fatty acids from soya oil, 10,1..17.0 parts of ethyl alcohol, 3.9.. 6.4 parts of glycerol, 2.5...4.4 parts of triglycerides, 10.4...30 parts emulsifiers agent, represented by soya liquid lecithin or soya liquid lecithin and MOA-9, ether of fatty alcohol with polyoxy ethylene (9) or ammonium lauryl sulfate, 1.2 parts of potassium hydroxide or 0.95 parts of potassium acetate or 6.4 parts of potassium oleate, water 0.5...1.7 parts, difference till 100 parts being unsaponifiable substances and salts of fatty acids or free fatty acids and salts.

The process according to invention consists of the following steps:
✔ Trans-esterification of the oils of rapeseed or sunflower with ethyl alcohol in excess for the trans-esterification reaction, in presence of potassium hydroxide and trans-esterification of the soybean oil with methyl alcohol in excess of the trans-esterification reaction, in the presence of sodium hydroxide, in an autoclave, at 40°C, for 8 hours, in a protective nitrogen atmosphere;
✔ Elimination of the methyl alcohol excess in the case of trans-esterification of soybean oil with methyl alcohol, by its removal through a water cooled condenser, on the beginning under the action of the pressure formed during the reaction and then by purging with nitrogen for ½ hours, from the autoclave heated at 80°C;
✔ Cooling of the reaction mass on which are maintained the glycerol and the others co-products of the trans-esterification reaction, and also excess of ethyl alcohol, and eventually neutralization of potassium hydroxide excess, from the mixture formed on the rapeseed oil trans-esterification with acetic acid or oleic acid;
✔ In the case of the neutralization with acetic acid maintenance for 24 hours for formation of a precipitate where is recovered 85.3% of the potassium acetate and separation of the precipitate;
✔ Removal of the potassium or sodium hydroxide excess from the reaction mass resulted from the trans-esterification of the sunflower oil or, respectively, soybean oil, purged of the methyl alcohol in the case of trans-methylation of the soybean oil, by passing through a column with strong cationic exchanger Purolite C154H, previously equilibrated with ethyl alcohol;
✔ Mixing of the intermediate products with surfactant agents, soybean liquid lecithin or soybean liquid lecithin and MOA-9, ether of fatty alcohol with polyoxy ethylene (9) or ammonium lauryl sulfate, and their homogenization by vigorous mixing, to form the final composition of agricultural adjuvant.

The preferred aspects of embodiments of the process described above according to the invention are:
- Trans-esterification of the rapeseed oil with ethyl alcohol 200% in excess of trans-esterification reaction, to form the reaction mass (R1), of the sunflower oil with ethyl alcohol 130% in excess of trans-esterification reaction, to form the reaction mass (R2) and of soya oil with methyl alcohol 100% in excess of the trans-esterification reaction to form the reaction mass (R3);
- Neutralization of 500 g mass of reaction (R1) formed on the trans-esterification of the rapeseed oil with 7.9 g of acetic acid 99% to form the intermediate product (R1.2) or with 37 g of oleic acid to form the intermediate product (R1.3);
- Removal of hydroxide excess from the reaction mass (R2) or (R3) by passing of 1200 ml at a flow of 20 ml/min, through a glass column with diameter of 4 cm filled with strong cationic exchanger Purolite C154H, previously equilibrated with 99.7% ethyl alcohol at a flow of 10 ml/min, discharging of the first 100 ml and collection of the next 1000 ml as neutral product (R2.1) or, respectively (R3.1);
- Mixing of the intermediate products with emulsifiers in the following proportions, 160 g (R1) with 20 g emulsifier soya liquid lecithin and 20 g MOA-9, ether of fatty alcohol with polyoxy ethylene (9); C₃₀H₆₂O₁₀; HLB 13-14, to obtain the basic adjuvant A1.1, 170 g (R1.2) with 30 g ammonium lauryl sulfate (ALS) technical grade, to obtain the adjuvant A1.2, 140 g of product (R1.3) with 60 g soya liquid lecithin to obtain the adjuvant A1.3, 140 g of product R2.1 with 60 g ammonium lauryl sulfate (ALS) technical grade to obtain the adjuvant A2, 300 g of product R3.1 with 40 g of ethyl alcohol, 30 g emulsifier soya liquid lecithin and 30 g emulsifier MOA-9 to obtain the adjuvant A3.

This invention presents the following advantages:
- Assure the formation of an adjuvant with an intrinsic resistance to biodegradation, due to the content of over 10% ethyl alcohol, resulted from the excess of the trans-ethylation reaction or added subsequently in the process of obtainment, which maintain the water activity under the level necessary for development of spoilage microorganisms;
- Provides a technical solution for obtainment of compositions which present superior characteristics of spray adjuvant, due to the ethylic alcohol which act synergically with the esters of the fatty acids for the plasticization of the plant cuticle, glycerol which act as a humectant, reducing the evaporation rate of the water and of the active compounds from the leaves, emulsifiers / surfactants which improve the wetting and coverage capacity of the leaves and reduce the rate of formation of the fine droplets with a high dispersion pattern;
- Form a range of agricultural adjuvants, efficient as performance enhancers of both plant protection products and of plant nutrition and stimulation products;
- Exploit the co-products, from the process of obtainment of fatty acids esters, through the trans-esterification reaction of the vegetable oils with lower alcohols, especially glycerol, by maintaining these into the intermediates products and on the final product, with benefits for the activity of agricultural adjuvant;
- Assure high yield of the process of trans-esterification, which is taking place at low temperatures, with low risk of peroxidation of (poly)unsaturated fatty acids and with low energetic consumption;
- Allow the formation of composition based exclusively on components resulted from agricultural raw material, which, after verification and compliance ensuring, could be certified for used in the organic agriculture systems.

In the following are presented invention embodiments, which illustrate this invention without limit it.

*Example 1.* 1000 g of degummed rapeseed oil, with the characteristics from the table 1, is added in a 2 liters stainless steel autoclave, with stirrer and heating, under protective nitrogen atmosphere.

**Tab. 1. The characteristics of the degummed rapeseed oil.**

| | | |
|---|---|---|
| Water and volatile | % m/m | 0.4 |
| Unsaponifiable substances | % m/m | 1.4 |
| Free fatty acids | % m/m | 1.9 |
| Saponification index | mg KOH/g | 169.5 |
| The main fatty acids composition (% w/w): C16: 24.4; C18: 1.2 ; C18-1: 16.1; C18-2: 24.5; C18-3: 7.3; C20-1: 7.3; C22-1: 42.4 | | |

25 g of potassium hydroxide 98% purity are dissolved in 420 g ethanol with 0.3% water (200% excess respecting to trans-esterification reaction) and the solution is added in the autoclave over the rapeseed oil. It is started the stirrer and the heating, up to 40°C. After a reaction time of 8 h, the reaction mass is cooled at room temperature. 1435 g yellow transparent reaction mass (R1) are collected, with the content (% w/w): fatty acids ethanol esters (FAEE) 64.6; triglycerides 5.1; glycerol 5.9; ethanol 20.0; potassium hydroxide 1.5 and water 0.4, corresponding to about 92.3% trans-esterification reaction yield. In the reaction product (R1) separation in different layers do not occur during 1...180 days of storage. 160 g of reaction product (R1) is treated by vigorous stirring with 20 g liquid soya lecithin emulsifier (characteristics in table 2) and 20 g MOA-9 emulsifier (fatty alcohol polyoxyethylene (9) ether: C₃₀H₆₂O₁₀; HLB 13-14) to obtain the basic adjuvant (A1.1), with the following composition: fatty acids ethanol esters (FAEE) 51.6; triglycerides 4.1; glycerol 4.7; ethanol 16.0; KOH 1.2; emulsifiers 20.0, water 0.5, difference till 100 being unsaponifiable substances and salts of fatty acids.

**Tab. 2. The characteristics of the liquid soya lecithin emulsifier.**

| Characteristics | Unit | Values |
|---|---|---|
| Insoluble in ether | % w/w | 0.31 |
| Insoluble in acetone | % w/w | 67.2 |
| Moisture and volatiles | % w/w | 0.64 |
| Acid value | mg/g KOH | 25.6 |
| Peroxides value | mmol/kg | 3.7 |

*Example 2.* 500 g of transparent reaction product (R1), obtained according to Ex.1, are treated under agitation with 7.9 g acetic acid 99% in order to neutralize KOH excess. Potassium acetate crystals appear after 24 h storage at 20°C deg. The suspension is filtered under vacuum. 21.6 g cake and 480 g clear solution (R1.2) are separated by filtration. 85.3% of the potassium acetate passes in filtrated cake. The composition of the resulted product (R1.2) is (%w/w): FAEE 64.3; potassium acetate 0.4; balance: triglycerides, glycerol, ethanol, unsaponifiable substances and fatty acids. 170 g of product (R1.2) is treated with 30 g of ammonium lauryl sulfate paste, technical grade, with the characteristics presented in table 4, and the adjuvant (A1.2) is obtained, with the following composition: fatty acids ethanol esters (FAEE) 51.6; triglycerides 4.4; glycerol 5.0; ethanol 17.0; ammonium lauryl sulfate 14.4; water 1.7; difference till 100 being unsaponifiable substances, free fatty acids and salts.

**Tab. 3. The characteristic of the used ammonium lauryl sulfate (ALS).**

| Characteristics | Unit | Values |
|---|---|---|
| ALS content | % w/w | 68.3 |
| Ammonium sulfate | % w/w | 1.4 |
| Ammonium chloride | % w/w | 0.17 |
| pH 2% solution | upH | 6.4 |

*Example 3:* 500 g of reaction product (R1) is treated under vigorous agitation with 37 g technical oleic acid, with characteristics presented in table 4 from bellow, in order to neutralize the potassium hydroxide excess.

**Tab. 4. The characteristics of the used technical oleic acid.**

| Characteristics | Unit | Value |
|---|---|---|
| Acid value | mg KOH/g | 197.9 |
| Iodine value | g I₂/100g | 91.4 |
| Water content | % w/w | 0.3 |

It result a clear solution, noted (R1.3), with the following composition (% w/w) fatty acids ethyl esters 60.3; triglycerides 4.8; glycerol 5.5; ethanol 18.7; potassium salts of fatty acids expressed as oleate 9.2; water 0.9. 140 g of intermediate product (R1.3) is mixed under vigorous agitation with 60 g liquid soya lecithin emulsifier, with the characteristic already presented (tab.2), to obtain the adjuvant (A1.3), with the following composition: fatty acids ethyl esters (FAEE) 42.1; triglycerides 3.3; glycerol 3.9; ethanol 13.1; potassium salts expressed as oleate 6.4, lecithin 30.0; water 0.6; the difference till 100 being unsaponifiable substances and fatty acids salts.

*Example 4.* 1000 g of degummed sunflower oil (with characteristics which are presented in table 5 from bellow), react in autoclave, in similar conditions with those from the Example 1, with a solution obtained from 15 g potassium hydroxide 98% and 360 g ethanol 99.7% , respectively 130% excess to trans-esterification reaction.

**Tab. 5. The characteristics of the used degummed sunflower oil.**

| | | |
|---|---|---|
| Water and volatile | % m/m | 0.3 |
| Unsaponifiable substances | % m/m | 0.4 |
| Free fatty acids | % m/m | 0.2 |
| Saponification index | mg KOH/g | 190.3 |
| The main fatty acids composition (% w/w): C16: 5.4; C18: 1.6 ; C18-1: 15.3; C18-2: 76.5 | | |

The reaction mass is cooled at room temperature and then there are collected 1355 g of transparent reaction mass (R2), with the following content (% w/w): fatty acids ethyl esters (FAEE) 68.4; triglycerides 7.1; glycerol 6.8; ethanol 15.9; potassium hydroxide 1.0 and water 0.3, corresponding to about 92.3% trans-esterification reaction yield. It is filled a glass column with the diameter of 4 cm with 250 ml strong cationic exchanger Purolite C145H (Purolite, Bala Cynwyd, PA, US), and is washed with 750 ml ethanol 99.7% at 10 ml/min flow rate. Then the column is feed with 1200 ml product (R2), at a flow rate of 20 mL/min. The first 100 mL of effluent are eliminated and then the next 1000 mL are collected like neutral product (R2.1), with the following composition (% w/w): FAEE 68.0; triglycerides 7.0; glycerol 6.6; ethanol 17.0; water 0.7; KOH residual 0.004. 140 g from the neutral product (R2.1) were mixed under vigorous stirring with ammonium lauryl sulfate technical paste, with characteristics presented in table 3, to obtain the adjuvant. (A2), which have the following composition: ethylic esters of fatty acids from sunflower (FAEE) 47.6; triglycerides 5.0; glycerol 4.7; ethanol 11.9; ammonium lauryl sulfate 29.5; water 0.4, the difference till 100 being unsaponifiable substances, fatty acids and salts.

*Example 5:* 1000 g of degummed soybean oil, with the characteristics which are presented in the table 6 from bellow react in autoclave, in similar conditions with those from the Example 1, with a solution obtained from 8 g sodium hydroxide 99,1 % and 226 g methanol 99,9% (100% excess respecting to trans-esterification reaction).

**Tab.5. The characteristics of the used degummed soybean oil**

| | | |
|---|---|---|
| Water and volatile | % m/m | 0.2 |
| Unsaponifiable substances | % m/m | 0.9 |
| Free fatty acids | % m/m | 1.3 |
| Saponification index | mg KOH/g | 190.7 |
| The main fatty acids composition (% w/w): C16: 6.3; C18: 3.4 ; C18-1: 27.3; C18-2: 53.8; C18-3:8.2; | | |

The pressure in autoclave was about 1.7 bars at the end of the trans-esterification process, due to the methanol vapors. The autoclave air-release valve is connected with a horizontal water cooler. The valve is opened and the methanol vapors are condensed. When the pressure in autoclave reaches the atmospheric pressure, the autoclave it is sparged with nitrogen for another ½ hours. The temperature is maintained in autoclave at 80°C during this period of methanol replacement. It cools the autoclave at the room temperature and there are collected 1125 g of reaction mass (R3) with the content (% w/w): fatty acids methyl esters (FAME) 85.4; triglycerides 3.3; glycerol 8.5; methanol 0.1; sodium hydroxide 1.0 and water 0.5, corresponding to about 96.1% trans-esterification reaction yield. 1000 ml of product (R3) are passed on a glass column with diameter of 4cm, which contain 250 ml strong cationic exchanger Purolite C145H (Purolite), like in Example 4. The effluent is collected like the product named (R3.1), and still contains 0.008% sodium hydroxide. 300 g product (R3) are treated by vigorous stirring with 40 g of ethylic alcohol 99.7%, 30 g liquid soya lecithin emulsifier, with the characteristics already presented in tab.2, and 30 g MOA-9 emulsifier in order to obtain the adjuvant (A3) with the following composition (% w/w): methyl esters of fatty acid from soybean (FAME): 64.1; triglycerides 2.5; glycerol 6.4; ethanol 10.1; water 0.7; emulsifiers 15.0, the difference till 100 being unsaponifiable substances, free fatty acids and traces of methanol and sodium hydroxide.

*Example* 6. It was tested the effect of the basic adjuvant A1.1, with the composition (%w/w): fatty acids ethanol esters (FAEE) 51.6; triglycerides 4.1; glycerol 4.7; ethanol 16.0; KOH 1.2; emulsifiers 20.0, water 0.5, difference till 100 being unsaponifiable substances and salts of fatty acids, on the efficacy of the application of the treatment with foliar fertilization with complex fertilizer NPK on wheat crop. 1641 g of monopotassium phosphate, 571 g potassium nitrate and 1661 g urea in water, obtaining 8500 g clear solution (S1). Over the solution (S1) were brought 1500 g of adjuvant (A1.1), prepared according to Example 1, and added slowly, under vigorous agitation. It resulted 10 kg of liquid N:P:K 8.5 - 8.5 - 8.5 complexed with adjuvant (F1) designed to be used for foliar application (on the calculation of K from the foliar fertilizer F1 was considered also the potassium from the basic adjuvant A1.1). it was also prepared a liquid fertilizer NPK 8.5 - 8.5 - 8.5, dissolving 1641 g monopotassium phosphate, 621 g potassium nitrate and 1661 g urea, on the quantity of water necessary to obtain 10 kg of fertilizer (F2) which was used as a standard product in the experiment.

The experiment was done on the agricultural season 2011/2013, on experimental plots of 25 m², at Fundulea (44°27'45" North latitude and 26°31'35" Eastern longitude), using winter wheat *(Triticum aestivum* L.), and cultivar Capo. Soybean was grown as the previous crop. The seeding rate was of 480...500 germinating grains per square meter. The seed was treated with equivalent 2.5l/t from a product which contains 12 g/l tebuconazole and 210 g/l imidacloprid (Nuprid Max Al 222 FS, Nufarm Srl, Bucharest, Romania). The soil from the experimental plots was a cambic chernozem, with the characteristics presented in table 6 from bellow. On the experimental area from Fundulea the average multi-yearly temperature is 10.25°C, and the yearly precipitations summarizes 571 mm. From the point-of-view of temperatures the season 2011/2012 presented variations, with temperatures excessive lower on February and with a spring and a summer hotter than normal and with a precipitation deficit higher than 102 mm during the vegetation season of wheat. The soil was fertilized with 200 kg/ha equivalent complex fertilizer NPK 15:15:15 (Azomure 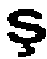 , Târgu-Mure 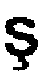 , Romania), before seeding. After that were applied conservation agricultural technologies, without using overturned furrow plowing, seedbed preparation being done by harrowing with a heavy disc harrow.

**Tab. 6. Characteristics of the cambic chernozem form Fundulea experimental field.**

| Characteristic | UM | Ap | Aph |
|---|---|---|---|
| Horizon depth | cm | 0-18 | 18-30 |
| Humus (C x 1.72) | % | 3.0 | 3.0 |
| Total N | % | 0.179 | 0.169 |
| C : N | - | 11.4 | 11.8 |
| CaCO₃ | % | 0.0 | 0.0 |
| pH (in H₂O) | pH unit | 6.3 | 6.5 |
| Total capacity of cation exchange, CEC | meq/100g | 21.1 | 21.3 |
| Total phosphorus (AL) | ppm | 28 | 14 |
| Mobile potassium | ppm | 98 | 87 |

At tillering stage was applied an herbicide based on amidosulfuron 100 g/l + iodosulfuron-methyl-Na 25 g/l + mefenpyr-dietil 250 g/l (Sekator Progress OD, Bayer Crop Science, Monheim am Rhein, Germany), in a dose equivalent to 0.1 l/ha. For foliar diseases control was applied only one treatment at GS39 (flag leaf blade all visible), using a product with 250 g/l sprioxamine + 167 g/l tebuconazole + 43 g/l triadimenol (Falcon 460 EC, Bayer Crop Science), applied on a dose of 0.6 l/ha. Together with the treatment for foliar diseases control was applied also an insecticide based on thiacloprid 100 g/l and deltametrin 10 g/l (Proteus, Bayer Crop Science), in dose of 0.4 l/ha.

The experiment for testing the adjuvant effect on the foliar fertilization of wheat was organized in random blocks, each of the two product tested, F1 and F2, being applied in separate treatments having each 4 repetitions. It was worked with a control on which was applied only a water spraying treatment. There were applied solutions of 3% fertilizers, on a spraying rate equivalent to 300 l/ha, corresponding to a dose of 9 kg/ha NPK fertilizer, or respectively 1.35 kg basic additive A1.1. Application of the solutions was done with a backpack sprayer SG20 (Stihl AG, Waiblingen, Germany), by spraying from 40 cm, with a spraying pressure set-up to 275 kPa, using a nozzle with flat jet and low drift (TeeJett^{®} flat-fan TT11002 model, Spraying Systems Co., Wheaton, IL, US). The treatments were applied during the growth stages GS31 (4th April 2012) and GS45 (7th May 2012). On the end of the vegetation season each repetition was separately harvested, the realized production being expressed in kg/ha with 86% dry matter. The date were analyzed by application of the linear general model, to determine the average values and the significance differences at a probability level of 5% (Statistica 10, StatSoft, Tulsa, OK, US). The results are presented in the bellow table 7.

**Tab. 7. The effect of the A1.1 adjuvant, prepared according to invention, on the efficacy of the foliar fertilizer NPK 8.5 - 8.5 - 8.5 on wheat (cv. Capo).**

| Treatment | Yield (kg/ha)* | % to control |
|---|---|---|
| Control untreated with foliar fertilizer | 5282b | 100% |
| F1 NPK plus adjuvant A1.1. cf. Ex.1 | 5721a | 102,3% |
| F2 NPK without adjuvant | 5405b | 108,3% |

| | | |
|---|---|---|
| *values followed by the same letter did not differ significantly for P>0.05 | | |

The obtained results demonstrated the efficacy of the A1.1 adjuvant realized according to Example 1, in facilitating the penetration of the ionic nutrients through the cuticle of the wheat plant, the production increase obtained on the experimental treatment done with the NPK fertilizer (F1), prepared with A1.1 adjuvant being significant, both comparing to untreated control and to the experimental treatment with the foliar fertilizer (F2) NPK 8.5 - 8.5 - 8.5, which does not contain added of spraying adjuvant.

*Example* 7. On the experimental field from Fundulea was done also an experiment in order to establish the effect of adjuvant A1.2 on the biofortification treatment with sodium selenite applied as foliar fertilizers on wheat. Se (IV) from the sodium selenite is a selenium species which are not translocated from the radicular system into the foliar one through xylem (Zhu et al., 2009, Trends Plant Sci. 14:436-442), thus an eventually biofortification of the wheat yield resulted from the treatment with selenite is the result of the selenite absorbed through cuticle and not of that absorbed by radicular system after leakage on soil. The soil on which was done the experiment has the characteristics presented in the above tab. 6, and the total selenium content (HF + HNO3 + HCl) is 0.197 mg/kg.

The experiment was done of experimental plots of 25 m², with winter wheat *(Triticum aestivum* L.), cultivar Capo, cultivated in similar conditions with those already presented in Example 6 regarding the agrotechnics, base fertilization before seeding and crop protection. The experiment was done in random blocks in a Latin square, 4 treatments in 4 repetitions. The 4 treatments were:
V₁ - control, treated with water,
V₂ - sprayed with a solution of sodium selenite pentahidrate, Na₂SeO₃.5 H₂O, 0.0111%, equiv. 10 g Se/ha for a spraying norm of 300 l/ha;
V₃ - sprayed with a solution of sodium selenite pentahidrate, Na₂SeO₃.5 H₂O, 0.0222%, equiv. 20 g Se/ha for a spraying norm of 300 l/ha;
V₄ - sprayed with a solution of sodium selenite pentahidrate, Na₂SeO₃.5 H₂O, 0.0111 %, equiv. 10 g Se/ha for a spraying norm of 300 l/ha and 0.5% spraying adjuvant A1.2 Ex.2, equivalent to a dose of 1.5 kg/ha.

Application of the solutions was done with a backpack sprayer SG10 (Stihl AG, Waiblingen, Germany), by spraying from 40 cm, with a spraying pressure set-up to 275 kPa, using a nozzle with flat jet and low drift (TeeJett^{®} flat-fan TT11002 model, Spraying Systems Co., Wheaton, IL, USA). The treatments were applied during the growth stages GS31 (5th April 2012). On the end of the vegetation season each repetition was separately harvested, the realized production being expressed in kg/ha with 86% dry matter. In the wheat grain selenium was determined, by atomic absorption spectrophotometry with hydride generation (Tinggi et al., 1992, J. Food Comp. Anal. 5, 269-280). The date were analyzed by application of the linear general model, to determine the average values and the significance differences at a probability level of 5% (Statistica 10, StatSoft, Tulsa, OK, US). The results are presented in the bellow table 8.

**Tab. 8. Influence of the adjuvant A1.2 done according to the invention on the biofortification treatment of wheat grains (cv. Capo) with selenium.**

| Treatment | Selenium content in the wheat grains (mcg/kg) | Yield (kg/ha) |
|---|---|---|
| Control untreated with selenium | 54c | 5121a |
| Se Na₂SeO₃.5 H₂O) equiv. 10 g / ha | 105b | 4958a |
| Se Na₂SeO₃.5 H₂O) equiv. 20 g / ha | 142a | 4549b |
| Se (Na₂SeO₃.5 H₂O) equiv. 10 g / ha plus spraying adjuvant A1.2 1,5kg/ha | 132a | 5029a |

| | | |
|---|---|---|
| * Values followed by the same letters do not differ significantly for P>0,05 | | |

The results demonstrate that adding the adjuvant increase significantly the performances of the biofortification treatments with selenium on the given experimental conditions, the level of selenium supplementation being similar in the treatment of 10 g/ha Se and spray adjuvant A1.2 1.5 kg/ha and Se 20g/ha, without the side effects of yield reduction, compensating / reducing the toxicity of the biofortification treatment with selenium for wheat plant.

*Example* 8. The basic adjuvant A1.3 was tested on greenhouse conditions in order to verify its effect on the performance increase of nicosulfuron, herbicide representative for the category of weakly acid herbicides from the sulfonylurea class, which solubility in water is increased on high pH. The used test plants were common cocklebur (*Xanthium strumarium*), dicotyledonous weed, and large crabgrass *(Digitaria sanguinalis),* monocotyledonous weed. The common cocklebur was sown on approx. 2 cm deep, in plastic pots of 15 cm diameter, and after emergence was thinned to only 2 plants. The large crabgrass was planted in the same type of plastic pots, at 1 cm deep, and after emergence was thinned to a cluster of around 15 plants. The pots contain a synthetic grown substrate enriched with nutrients for the first week of plant growth (Canna Terra Professional Plus, Canna International BV, Oosterhout, Netherlands), and consequently were not applied fertilizers. The pot were maintained in greenhouse conditions, at 28±2°C, with a photoperiod of 16 hours, supplemented with light with an intensity of 160 µE/m²/s, from a metal halide lamp, when the light intensity was below 500 µE/m²/s. Plants were grown for two weeks, at a relative humidity varying from 55 to 85%. The plant with uniform growth were selected, the common cocklebur *(Xanthium strumarium*), having 4..5 leaves and a height between 11 and 15 cm, and those of large crabgrass *(Digitaria sanguinalis),* having 3-4 leaves and a height between 8.5 and 12.5 cm. These plants were used in the experiment for testing the action of the adjuvant composition. The experiment was done in random blocks, each treatment comprising 4 repetitions, each repetition being constitute from 5 pots with test plants common cocklebur *(Xanthium strumarium*), and large crabgrass *(Digitaria sanguinalis).*

It was used a commercial formulation of nicosulfuron, 75% water dispersible granules (Accent^{®} 75 WG, DuPont Crop Protection, Wilmington, DE, US), sprayed as a solution of 0.025%, corresponding to a dose of 50 g applied in a spraying norm of 200 l/ha. The spraying mixtures was done in standard hard water (method WHO/M/29), the water hardiness being checked according to method CIPAC MT73 (CIPAC Handbook F, p201) and corrected if was necessary. The experiment included a control untreated with herbicide or adjuvant, which was sprayed only with standard hard water, which was used as reference to estimate the phytotoxic effects. Were done also treatments on which the herbicide was applied without adjuvant, together with the recommended adjuvant Trend 90 (DuPont Crop Protection, isodecyl alcohol ethoxylate, 900 g/l) 0.1% (v/v) in spraying solution, equivalent to 200 ml/ha, or with an emulsion of 1% ethylic esters of fatty acids from soybean oil (soybean oil methylate). The treatment were applied by spraying from 50 cm, with a spraying pressure set-up at 241 kPa, using a nozzle with flat jet and limited drift (TeeJett^{®} flat-fan SS8001 E model, Spraying Systems Co., Wheaton, IL, SUA). The tested treatments were:
V₁ - control, untreated with herbicide or adjuvant, sprayed only with standard hard water;
V₂ - nicosulfuron, dose equivalent to 50 g/ha, applied without adjuvant;
V₃ - nicosulfuron, dose equivalent to 50 g/ha, Trend 90 0.1 %;
V₄ - nicosulfuron, dose equivalent to 50 g/ha, soybean oil methylate 1 %;
V₅ - nicosulfuron, dose equivalent to 50 g/ha, adjuvant A1.3. 0.5%;
V₆ - nicosulfuron, dose equivalent to 50 g/ha, adjuvant A1.3. 1 %.

At three weeks after the treatment it was determined the fresh weight of plants on each repetition by weighting and was estimated the phytotoxicity, using a scale from 0% (without visible symptoms) to 100% (plant completely destroyed). The data were analyzed by application of the linear general model, to determine the average values and the significance differences at a probability level of 5% (Statistica 10, StatSoft, Tulsa, OK, US). The results are presented in the bellow table 9.

**Tab. 9. Effect of different adjuvants on nicosulfuron efficacy***

| Treatment | common cocklebur *(Xanthium strumarium)* | | large crabgrass *(Digitaria sanguinalis)* | |
|---|---|---|---|---|
| | Phytotoxicity (%) | Mass reduction (% control) | Phytotoxicity (%) | Mass reduction (% control) |
| nicosulfuron 50 g/ha, without adjuvant | 33c | 59c | 40c | 52c |
| nicosulfuron 50 g/ha, Trend 90 0,1%; | 85a | 88a | 89a | 91a |
| nicosulfuron 50 g/ha, soybean oil methylate 1% | 63b | 72b | 70b | 76b |
| nicosulfuron 50 g/ha, adjuvant A1.3 0,5% | 83a | 85a | 86a | 93a |
| nicosulfuron 50 g/ha, adjuvant A1.3 1% | 87a | 89a | 92a | 92a |

| | | | | |
|---|---|---|---|---|
| * Experiment done in greenhouse condition. Values followed by the same letters do not differ significantly for P>0,05 | | | | |

The results demonstrate a significant effect of the adjuvant A1.3, applied together with nicosulfuron, on the efficacy of the herbicide in controlling common cocklebur *(Xanthium strumarium)* and large crabgrass *(Digitaria sanguinalis),* in the given experimental conditions. The efficacy of the adjuvant A1.3 is similar with that of commercial recommended product and it is higher than that of the mixture of the methyl esters obtained by transesterification of the soybean oil.

*Example* 9. It was tested the efficacy of adjuvant A2, obtained according to Ex.4 on the performances of glycine-betaine, compound with an osmoprotectant action, regarding the protection of tomato plants against water stress. Glycine - betaine presents a molecule with quaternary nitrogen, strongly polar, with a reduced penetrability on the hydrophobic plant cuticle.

Tomato plants *(Lycopersicum esculentum* cv. Cristal F1), transplants of 60 days, were re-potted in vegetation pots of 25 cm dia. and 50 cm height, on which was introduced a synthetic grown substrate enriched with nutrients for the first week of plant growth (Canna Terra Professional Plus, Canna International BV). The vegetation pots were maintained in greenhouse conditions, at 22±2°C during the day and 17±2°C during the night, with a photoperiod of 12 hours, supplemented with light with an intensity of 160 µE/m²/s, from a metal halide lamp, when the light intensity was below 500 µE/m²/s. Experiment was runned for 56 days. The grown substrate contained initial nutrient reserves, thus the plants were fertilized only one time, at 28 days after transplantation, by the application of 100 ml of nutritive solution 1 g/l of fertilizer 20 - 8 - 20 (N-P₂O₅-K₂O, Eurofertil, TimacAgro Romania). The experiment was organized in a random bloc with 4 repetitions for each treatment, each repetition including 5 plants. It was used purified glycine-betaine (99%, Sigma Aldrich, St. Louis, Mo, US). The experimental treatments included also controls, sprayed only with water, water stress control and unstressed control. These experimental treatments were:
V₁ - control unstressed, sprayed with water; 2 treatments x 2 ml per plant, equivalent 100 l/ha;
V₂ - control water stressed, sprayed with water; 2 treatments x 2 ml per plant, equivalent 100 l/ha;
V₃ - water stressed, sprayed with glycine-betaine; 2 treatments x 2 ml 5 mM per plant, equivalent 58,5 g in 100l/ha;
V₄ - water stressed, sprayed with glycine-betaine; 2 treatments x 2 ml 10 mM per plant, equivalent 117 g in 100l/ha;
V₅ - water stressed, sprayed with glycine -betaine and adjuvant, 2 treatments x 2 ml solution 5 mM betaine + 1% adjuvant A2 per plant, equivalent 58,5 g betaine and 1 kg adjuvant A2 in 100l/ha.

Treatments were applied in the 2^{nd} and 29^{th} day after transplantation, by spraying each plant with the help of a glass atomizer with metal top and plastisol bulb (model 15-RD, DeVilbiss Healthcare, Somerset, PA, USA). The unstressed control was irrigated once every five day at 100% field capacity, and the water stressed plants were irrigated each two weeks at 100% field capacity. At the end of the 8 weeks after transplantation the experiment was terminated, and the morphological parameters, respectively the plant height and root length, were determined. The data were processed by analysis of variance (Statistica 10, StatSoft).

The results were presented in the bellow table 10. The adjuvant A2 obtained according to Example 4 increase of the performances of the foliar applied glycine-betaine on the limitation of the effect of water stress on tomato plants.

**Tab. 10. Influence of the treatments with composition obtained according to invention on tomato plants, water stressed and unstressed*.**

| Treatment | Plant height (cm) | Root length (cm) | Number of Leaves | Leaves surfaces (mm²) | Average yield** (g ripened fruits / plant) |
|---|---|---|---|---|---|
| V₁ control unstressed, sprayed with water | 57.85±1.84a | 55.24±0,78a | 32.00±5.1a | 672.47±6.21a | 327±58.6a |
| V₂ control water stressed, sprayed with water | 44.04±4.42c | 38.45±2.27c | 25.00±3.2b | 527.80±2.93b | 192±32.6b |
| V₃ water stressed, glycine-betaine, 2x 5 mM equiv.. 58,5 g in 100 l/ha | 47.30±3.42c | 45.50±2.39b | 28.00±2.1b | 587.58±4.92ab | 223±28.2b |
| V₄ water stressed, glycine-betaine, 2x 5 mM equiv. 117 g in 100 l/ha | 56.50±2,89b | 54.80±1.88b | 33.00±4,2a | 663.16±5.84a | 312±38.6a |
| V₅ water stressed, glycine-betaine and adjuvant, 2 treatments *x* 2 ml solution 5 mM betaine + 1% adjuvant A2 perplant, equivalent 58,5 g betaineand 1 kg adjuvant A2 in 100l/ha. | 54.50±4.64b | 55.20±1.82b | 32.01±2.6a | 652.16±8.24a | 309±35.6a |

| | | | | | |
|---|---|---|---|---|---|
| *Values followed by the same letter did not differ significantly for P>0.05; **Production for 30 days cycle of flowering - fructification | | | | | |

Application of the A2 adjuvant together with glycine-betaine in concentration of 5 mM increase the effect of betaine, making it similar with that of the treatments with a double concentration, of 10 mM, maintaining an yield level on the tomatoes plant water stressed similar with that on water unstressed control.

*Example 10.* The effect of adjuvant A3, obtained according to Example 5, was tested to determine whether its addition improve the activity of spinosad against leafminers flies, *Liriomyza trifolii* (Burgess). Spinosad is a metabolite produced by biosynthetic process by the actinomycetes *Saccharopolyspora spinosa,* and provides excellent crop protection with a relatively low toxicity to non-target organisms, including many beneficial insects. For that reason spinosad is accepted on organic farming systems. His activity against insect feeding inside of the leave is limited, because spinosad is not highly systemic in plants, being demonstrated only its limited translaminar movement into leaf tissues. Addition of the spraying adjuvant increase the efficacy of spinosad based insecticide in controlling leafminers larvae (Larson, 1997, Arthrop. Manag. Test. 22:415-416).

The experiment was done on the Fundulea experimental field, which characteristics were already presented in Example 6. The muskmelon *(Cucumis melo* L., cv. Charentais) experimental plots were established on 19^{th} of April, 2012, using 25 days old transplants, on a density equivalent to 12.000 transplants per ha. The experimental filed where experiment was plotted was previously cultivated with corn and was fertilized with 200 kg/ha equivalent complex fertilizer NPK 15:15:15 (Azomure 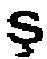 ), on beginning of March. Herbicidation was done by application on the whole surface of a dose of 4 l/ha Stomp 330 EC, sprayed in a mixture with 450 l water per ha, 10 days before transplantation, and incorporated in soil with a by harrowing with a disc harrow.

Plots of 20 m² were made with edges of two untreated rows, in random blocks, with 4 repetitions on each treatment. Application of treatments were done with a backpack sprayer SG10 (Stihl AG, Waiblingen, Germany), by spraying from 40 cm, with a spraying pressure set-up to 275 kPa, using a nozzle with flat jet and low drift (TeeJett^{®} flat-fan TT11002 model, Spraying Systems Co., Wheaton, IL, USA). Were applied 3 treatments, one in the phenophase of 3...4 leaves and in the phenophase 6...8 leaves, as a second treatment. In phenophase 3...4 leaves, one day after the treatment with insecticide, was applied also a treatment with Previcur 607 SL (propamocarb 607 g/l) for controlling the downy mildew (Pseudoperonospora cubensis), on the whole area of the experiment. The experimental treatments were:
V₁ - control, untreated for *Liriomyza trifolii;*
V₂ - acetamipirid 0.025% (Mospilan 20 SG, 200 g/kg acetamipirid, Nippon Soda Company, Tokio, Japonia), equivalent 0.1 kg/ha in a spraying norm of 400 l/ha, considered as standard for treatment of leafminers flies larvae because is a systemic insecticide;
V₃ - spinosad 0.05% (Laser 240 SC, 240 g/l spinosad, Dow AgroSciences, Indianapolis, USA), equivalent 0.2 kg/ha at a spraying norm of 400 l/ha;
V₄ - spinosad 0.05% (Laser 240 SC, 240 g/l spinosad, Dow AgroSciences, Indianapolis, USA), equivalent 0.2 kg/ha at a spraying norm of 400 l/ha + adjuvant A3, according to Example 5, 0.4%, equiv. to 1.6 kg at a spraying norm of 400 l/ha.

The impact of each treatment on leafminer larvae mortality was estimated by counting the number of live and dead / paralyzed larvae, and also of the empty and total mines per each sampled leaf. A total of 10 leaves per experimental plot were collected at 3 days after treatment and examined in the laboratory for presence of mines in leaves and larvae status in the mines. The data were processed by analysis of variance (Statistica 10, StatSoft). The results of the experiment are presented in the bellow table 11.

**Tab. 11.The influence of spray adjuvant A3 on the efficacy of spinosad in controlling the leafminers larvae on muskmelon.**

| Treatment | Mines total | Empty mines | Mines with live larvae | Dead larvae |
|---|---|---|---|---|
| First treatment | | | | |
| control, untreated for *Liriomyza trifolii;* | 18.2c | 5.7a | 3.6a | 5.8a |
| Acetamipirid 0.025% - 0.1 kg/ha | 0.4a | 0c | 0.1c | 0.1c |
| Spinosad 0.05% - 0.2 kg/ha | 8.2b | 3.3b | 1.2b | 1.8b |
| Spinosad 0.05% - 0.2 kg/ha + adjuvant A3 0.4% - 1.6 kg/ha | 2.2a | 0c | 0.3c | 2.1b |

| Second treatment | | | | |
|---|---|---|---|---|
| control, untreated for *Liriomyza trifolii;* | 15.2c | 3.2a | 0.4a | 2.9a |
| Acetamipirid 0.025% - 0.1 kg/ha | 0.2a | 0b | 0b | 0.3c |
| Spinosad 0.05% - 0.2 kg/ha | 6.8b | 2.7a | 0.3a | 3.1a |
| Spinosad 0.05% - 0.2 kg/ha + adjuvant A3 0.4% - 1.6 kg/ha | 2.2a | 0b | 0b | 1.4b |

| | | | | |
|---|---|---|---|---|
| * Values followed by the same letter did not differ significantly for P>0.05 | | | | |

The systemic insecticide acetamipirid prevent the penetration of the insect in leaves, but spinosad kill the larvae from the mines leaves. Adding of adjuvant A3 promote the penetration of the spinosad in leaves and its insecticidal action toward the leafminers larvae, efficacy increasing to the level of systemic insecticide.

## Claims

1. Composition of agricultural adjuvant according to invention **characterized in that** is made from 42.1 ... 54.8 parts of ethyl esters of fatty acids from rapeseed or sunflower or 64.1 parts of methyl esters of fatty acids from soybean oil, 10,1..17.0 parts of ethyl alcohol, 3.9.. 6.4 parts of glycerol, 2.5...4.4 parts of triglycerides, 10.4...30 parts emulsifiers agent, represented by soybean liquid lecithin or soybean liquid lecithin and MOA-9, ether of fatty alcohol with polyoxy ethylene (9), or ammonium lauryl sulfate, 1.2 parts of potassium hydroxide or 0.95 parts of potassium acetate or 6.4 parts of potassium oleate, water 0.5...1.7 parts, difference till 100 parts being unsaponifiable substances and salts of fatty acids or free fatty acids and salts.

2. Process according to invention **characterized in that** consists of the following steps: trans-esterification of the oils of rapeseed or sunflower with ethyl alcohol in excess of the trans-esterification reaction, in presence of potassium hydroxide and trans-esterification of the soybean oil with methyl alcohol in excess of the trans-esterification reaction, in the presence of sodium hydroxide, in an autoclave, at 40°C, for 8 hours, in a protective nitrogen atmosphere; elimination of the methyl alcohol excess in the case of trans-esterification of soybean oil with methyl alcohol, by its removal through a water cooled condenser, on the beginning under the action of the pressure formed during the reaction and then by purging with nitrogen for ½ hours, from the autoclave heated at 80°C; cooling of the reaction mass on which are maintained the glycerol and the others co-products of the trans-esterification reaction, and also the excess of ethyl alcohol, and eventually the neutralization of the potassium hydroxide excess, from the mixture formed on the trans-esterification of the rapeseed oil with acetic acid or oleic acid; in the case of the neutralization with acetic acid maintenance for 24 hours for formation of a precipitate where is recovered 85.3% of the potassium acetate and separation of the precipitate; removal of the potassium or sodium hydroxide excess from the reaction mass resulted from the trans-esterification of the sunflower oil or, respectively, soybean oil, purged of the methyl alcohol in the case of trans-methylation of the soybean oil, by passing through a column with strong cationic exchanger Purolite C154H, previously equilibrated with ethyl alcohol; mixing of the intermediate products with surfactant agents, soybean liquid lecithin or soybean liquid lecithin and MOA-9, ether of fatty alcohol with polyoxy ethylene (9) or ammonium lauryl sulfate, and their homogenization by vigorous mixing, to form the final composition of agricultural adjuvant.

3. Process according to claim 2 **characterized in that** the trans-esterification step with in excess alcohol is done, in the case of use of rapeseed oil with ethyl alcohol 200% in excess of trans-esterification reaction, to form the reaction mass (R1), of the sunflower oil with ethyl alcohol 130% in excess of trans-esterification reaction, to form the reaction mass (R2) and of soybean oil with methyl alcohol 100% in excess of the trans-esterification reaction to form the reaction mass (R3).

4. Process according to claim 2 **characterized in that** the step of eventually neutralization of the excess of potassium hydroxide from the mixture formed on the trans-esterification of the rapeseed oil with an excess of ethyl alcohol is done by the reaction of 500 g mass of reaction (R1) formed on the trans-esterification of the rapeseed oil with 7.9 g of acetic acid 99% to form the intermediate product (R1.2) or with 37 g of oleic acid to form the intermediate product (R1.3);

5. Process according to claim 2 **characterized in that** the step of removal of the excess of potassium or sodium hydroxide from the reaction mass resulted from the trans-esterification of the sunflower oil, or, respectively, soybean oil is done by passing of 1200 ml at a flow of 20 ml/min, through a glass column with diameter of 4 cm filled with strong cationic exchanger Purolite C154H, previously equilibrated with 99.7% ethyl alcohol at a flow of 10 ml/min, discharging of the first 100 ml and collection of the next 1000 ml as neutral product (R2.1) or, respectively (R3.1)

6. Process according to claim 2 **characterized in that** the step of mixing the intermediate products with emulsifiers is done by mixing of the intermediate products with emulsifiers in the following proportions, 160 g (R1) with 20 g emulsifier soya liquid lecithin and 20 g MOA-9, ether of fatty alcohol with polyoxy ethylene (9); C₃₀H₆₂O₁₀; HLB 13-14, to obtain the basic adjuvant A1.1, 170 g (R1.2) with 30 g ammonium lauryl sulfate (ALS) technical grade, to obtain the adjuvant A1.2, 140 g of product (R1.3) with 60 g soya liquid lecithin to obtain the adjuvant A1.3, 140 g of product R2.1 with 60 g ammonium lauryl sulfate (ALS) technical grade to obtain the adjuvant A2, 300 g of product R3.1 with 40 g of ethyl alcohol, 30 g emulsifier soya liquid lecithin and 30 g emulsifier MOA-9 to obtain the adjuvant A3.
